(19) **Europäisches Patentamt**
**European Patent Office**
**Office européen des brevets**

(11) **EP 1 826 537 A2**

(12) **EUROPÄISCHE PATENTANMELDUNG**

(43) Veröffentlichungstag:
**29.08.2007 Patentblatt 2007/35**

(51) Int Cl.:
***G01F 1/66*** *(2006.01)*

(21) Anmeldenummer: 07002683.6

(22) Anmeldetag: **08.02.2007**

(84) Benannte Vertragsstaaten:
**AT BE BG CH CY CZ DE DK EE ES FI FR GB GR HU IE IS IT LI LT LU LV MC NL PL PT RO SE SI SK TR**
Benannte Erstreckungsstaaten:
**AL BA HR MK YU**

(30) Priorität: **25.02.2006 DE 102006008827**
**21.04.2006 DE 102006019146**

(71) Anmelder: **SIKA Dr.Siebert & Kühn GmbH & Co. KG.**
**34260 Kaufungen (DE)**

(72) Erfinder:
• **Die Erfinder haben auf ihre Nennung verzichtet.**

(74) Vertreter: **WALTHER, WALTHER & HINZ**
**Patentanwälte - European Patent Attorneys**
**Heimradstrasse 2**
**34130 Kassel (DE)**

(54) **Vorrichtung zur Ermittlung der Strömungsgeschwindigkeit eines Fluides oder Gases in einem Rohr**

(57) Gegenstand der Erfindung ist eine Vorrichtung zur Ermittlung der Strömungsgeschwindigkeit eines Fluids oder Gases in einem Rohr (1), wobei das Rohr (1) zwei beabstandet zueinander angeordnete Ultraschallwandler (3) aufweist, die jeweils als Sender und Empfänger arbeiten, wobei das Rohr (1) mindestens zwei zueinander parallele Flächen aufweist, wobei mindestens zwei beabstandet zueinander angeordnete Schallwandler (3) auf der Außenseite auf mindestens einer der beiden parallelen Flächen aufgesetzt sind.

**Fig. 1**

EP 1 826 537 A2

**Fig. 2**

**Beschreibung**

Die Erfindung betrifft eine Vorrichtung zur Ermittlung der Strömungsgeschwindigkeit eines Fluids oder Gases in einem Rohr, wobei das Rohr zwei beabstandet zueinander angeordnete Ultraschallwandler aufweist, die jeweils als Sender und Empfänger arbeiten.

Akustische Strömungsmessverfahren nutzen Schallwellen zur Bestimmung der Strömungsgeschwindigkeit aus. Ein bekanntes Verfahren zur Ermittlung der Strömungsgeschwindigkeit ist unter dem Begriff "Laufzeit-Differenzverfahren" bekannt. Ein solches Laufzeit-Differenzverfahren macht sich die Tatsache zu nutze, dass die Ausbreitungsgeschwindigkeit eines Ultraschallsignals von der Strömungsgeschwindigkeit des Mediums, in dem es sich ausbreitet, abhängig ist. Ein in eine Strömung eingekoppeltes Ultraschallsignal bewegt sich entgegen der Flussrichtung der Strömung langsamer als in Flussrichtung. Die technische Umsetzung zur Ermittlung der Strömungsgeschwindigkeit erfolgt durch die Verwendung zweier Ultraschallwandler mit im Wesentlichen identischer Übertragungsfunktion. Um nun die Laufzeitdifferenz zu ermitteln wird ein Ultraschallimpuls durch das Medium in Strömungsrichtung gesendet, ein weiterer in der entgegengesetzten Richtung. Die Ultraschallwandler arbeiten dabei abwechselnd als Sender und Empfänger. Die Laufzeit der Schallsignale, die das Medium in Flussrichtung durchlaufen, ist nun kürzer als die Laufzeit der Schallsignale, die das Medium entgegen der Flussrichtung durchlaufen. Der Laufzeitunterschied $\Delta t$ wird gemessen und erlaubt die Bestimmung der mittleren Strömungsgeschwindigkeit auf dem vom Schall durchlaufenden Pfad.

Die Ermittlung der Strömungsgeschwindigkeit, d. h. auch die Genauigkeit der Ermittlung der Strömungsgeschwindigkeit, ist von verschiedenen äußeren Faktoren abhängig, so insbesondere von Temperatur, Druck und Dichte des Medium. Darüber hinaus hat sich herausgestellt, dass ein durchströmtes rundes Rohr ebenfalls zu Verfälschungen der Messergebnisse führt. Der Grund hierfür ist wie folgt zu begründen:

Das von dem Schallwandler in das Rohr eingekoppelte Schallsignal wird mindestens einmal von der Rohrwandung reflektiert, bevor es bei dem Schallwandler ankommt, der für dieses Signal als Empfänger fungiert. Trifft eine solche Schallwelle auf eine gewölbte Oberfläche, wie sie bei einem runden Rohr gegeben ist, weitet sich das Schallbündel naturgemäß aus. Das heißt, dass Schallsignal wird verzerrt, der Nulldurchgang wird unscharf. Ein solches Signal ist nicht reproduzierbar erfassbar.

Um nunmehr eine Verfälschung der Messergebnisse durch Aufweiten des Schallbündels zu vermeiden, wird erfindungsgemäß vorgeschlagen, dass das Rohr mindestens zwei zueinander parallele Wände aufweist, wobei mindestens zwei beabstandet zueinander angeordnete Schallwandler auf der Außenseite auf mindestens einer der beiden parallelen Wände aufgesetzt sind. Hieraus ergibt sich, dass grundsätzlich zwei Varianten für das Aufsetzen der Schallwandler umfasst sind. Nämlich zum einen, dass beide Schallwandler auf der einen der beiden parallelen Wände hintereinander aufgesetzt sind, und zum anderen, dass die Schallwandler gegenüberliegend auf der jeweils anderen der beiden parallelen Wände ebenfalls hintereinander versetzt angeordnet sind.

Die Variante, dass die Schallwandler beabstandet zueinander jeweils auf einer der zwei parallelen Wände angeordnet sind, hat bei geringdämpfenden Medien den Vorteil, dass ein längerer Messweg erzielbar ist, was eine hohe Zeitauflösung und damit genaue Messergebnisse ermöglicht.

Bei der anderen Variante, bei der die Schallwandler auf der gleichen Wand hintereinander außen aufgebracht sind, besteht bei stark dämpfenden Medien den Vorteil, dass ein hohes Signal/Rausch Verhältnis erhalten wird.

Nach einem weiteren Merkmal ist das Rohr als Vierkantrohr, und hier insbesondere als Rechteckrohr ausgebildet, wobei hierdurch erreicht wird, dass die in das Rohr eingekoppelte Transversalwelle im Wesentlichen in den Seitenwandungen des Rohres verbleibt, und insofern im Wesentlichen keine Schallanteile von den Seitenwandungen in das Medium eingekoppelt werden. Dies ist insofern von Vorteil, als solche Schallanteile sich mit dem Nutzschall, der durch den Schallwandler über die Wand, auf der der Schallwandler aufsitzt, in das Medium unmittelbar eingekoppelt wird, nicht überlagern können, was zu unscharfen Messergebnissen führen würde. Durch eine solche rechteckige Gestaltung des Rohres wird eine Verlängerung des wirksamen Messweges, also der effektiven Messstrecke bei gleichem Einfallwinkel des Schalls und bei gleicher Fließgeschwindigkeit, erreicht, was zu einer höheren Auflösung und damit zu genaueren Messergebnissen führt. Der Messweg ist definiert durch den vektoriellen Anteil der Ultraschallausbreitung, der die gleiche Richtung wie die Strömungsgeschwindigkeit aufweist. Insbesondere ist von Vorteil, wenn die Schallwandler auf der Schmalseite des Rechteckrohres aufgesetzt sind, und wobei weiterhin die wirksame Breite des Schallwandlers der lichten inneren Breite des Rohres entspricht. Durch die Einkopplung des Schalls über die gesamte Querschnittsfläche der Strömung wird bewirkt, dass der gesamte Querschnitt auch zur Bestimmung des Messergebnisses beiträgt, d. h. die Auflösung wird optimiert.

Nach einem weiteren Merkmal der Erfindung wird durch den Ultraschallwandler der Schall winklig in das Rohr eingekoppelt, um einen Messweg zu erzeugen. Zur winkligen Einkopplung des Schalls ist ein Koppelkeil vorgesehen, wobei der Koppelkeil unmittelbar auf der Wand des Rohres aufliegt und der Schallwandler selbst winklig zur Oberfläche der Wand des Rohres angeordnet ist.

Nach einem weiteren besonderen Merkmal ist vorgesehen, dass zur Erzeugung einer turbulenten Strömung in Abhängigkeit von der Viskosität und der Strömungsgeschwindigkeit des Mediums das Höhe zu Breite Verhältnis zwischen 1 : 5 und 1 : 2, vorzugsweise bei 1 : 3 liegt. Eine turbulente Strömung hat gegenüber eine laminaren Strömung den Vorteil, dass eine turbulente Strömung ein gleichbleibend flaches Strömungsprofil ausbildet. Eine laminare Strömung hingegen bildet ein kurvenförmiges Strömungsprofil aus. Ein gleichbleibendes flaches Strömungsprofil hat den Vorteil, dass die Geschwindigkeit der Strömung über den Querschnitt an allen Stelle in Wesentlichen gleich ist. Ein solches vergleichsmäßiges Geschwindigkeitsprofil hat ebenfalls den Vorteil, dass die Messergebnisse genauer sind als bei einem kurvenförmigen Geschwindigkeitsprofil, wie es bei einer laminaren Strömung auftritt.

Ein weiteres Merkmal der Erfindung zeichnet sich dadurch aus, dass der Winkel des Keils derart gewählt ist, dass bei Auftreffen des Longitudinalwellenanteils auf die Oberfläche des Rohres dieser Longitudinalwellenanteil nahezu vollständig reflektiert wird. Hierzu ist Folgendes zu bemerken:

Vom Schallwandler werden durch den Koppelkeil Schallwellen mit transversalem und longitudinalem Wellenanteil in das Rohr eingekoppelt. Der longitudinale Wellenanteil eilt dem transversalen Wellenanteil voraus. Durch die nahezu vollständige Reflektion des Longitudinalwellenanteils nach Auftreffen dieses Wellenanteils auf die Oberfläche des Rohres wird erreicht, dass im Wesentlichen lediglich der Transversalwellenanteil in die Wandung des Rohres eingekoppelt wird, und dieser transversale Wellenanteil einen wiederum longitudinalen Wellenanteil in das Medium als Schallwelle überträgt. Dadurch, dass der longitudinale Wellenanteil reflektiert wird, kann dieser sich nicht mit dem Longitudinalwellenanteil überlagern, der von dem Transversalwellenanteil bei Übergang von der Rohrwandung in das Medium übertragen wird. Solche Überlagerungen würden zu einem Rauschen führen, was zu unscharfen Messergebnissen führen würde.

Nach einem weiteren Merkmal der Erfindung ist vorgesehen, dass die Wandstärke kleiner ist als die Wellenlänge der in die Wandung eingekoppelten Transversalwelle. Das bedeutet, dass die Wandstärke s kleiner ist als das Verhältnis der Geschwindigkeit der Transversalwelle in der Rohrwandung zu der Frequenz f. Hierdurch wird erreicht, dass in der Wand des Rohres im Wesentlichen kein Longitudinalwellenanteil entstehen kann. Gleichzeitig wird hierdurch die Schalltransmission unterhalb der Sohle des Koppelkeils optimiert.

Ein weiteres vorteilhaftes Merkmal der Erfindung zeichnet sich dadurch aus, dass das Vierkantrohr in den Ecken ein unterschiedliches Gefüge zu den übrigen Wänden des Rohres aufweist. Es hat sich herausgestellt, dass diese Gefügeunterschiede in den Eckbereichen des Rohres zu den übrigen Flächen des Rohres die Transmission des Schalls von den Wandungen des Rohres, durch die der Schall in das Medium eingekoppelt wird, in die nahezu senkrecht stehenden Wandungen erschwert wird. Das heißt, dass das, was an Schallenergie durch den Schallwandler in die entsprechende Wandung eingekoppelt wird, zum großen Teil in das Medium übertragen wird, eben weil- wie bereits ausgeführt - nicht die Gefahr besteht, dass dieser transversale Wellenanteil in die dazu senkrechte Seitenwandung übertragen wird. Schallanteile in der Seitenwand des Rohres würden wiederum zu Überlagerungen führen und damit zu unscharfen Messergebnissen.

Anhand der Zeichnungen wird die Erfindung nachstehend beispielhaft näher erläutert.

Figur 1      zeigt eine Messstrecke mit einem Rohr, bei dem die Ultraschallwandler auf die Rohrwand aufgesetzt sind (Clamp-On-System);

Figur 2      zeigt einen Schnitt gemäß der Linie II - II aus Figur 1;

Figur 3      zeigt schematisch eine Darstellung zur Ermittlung der Geschwindigkeit des Strömungsmediums in einem Messrohr.

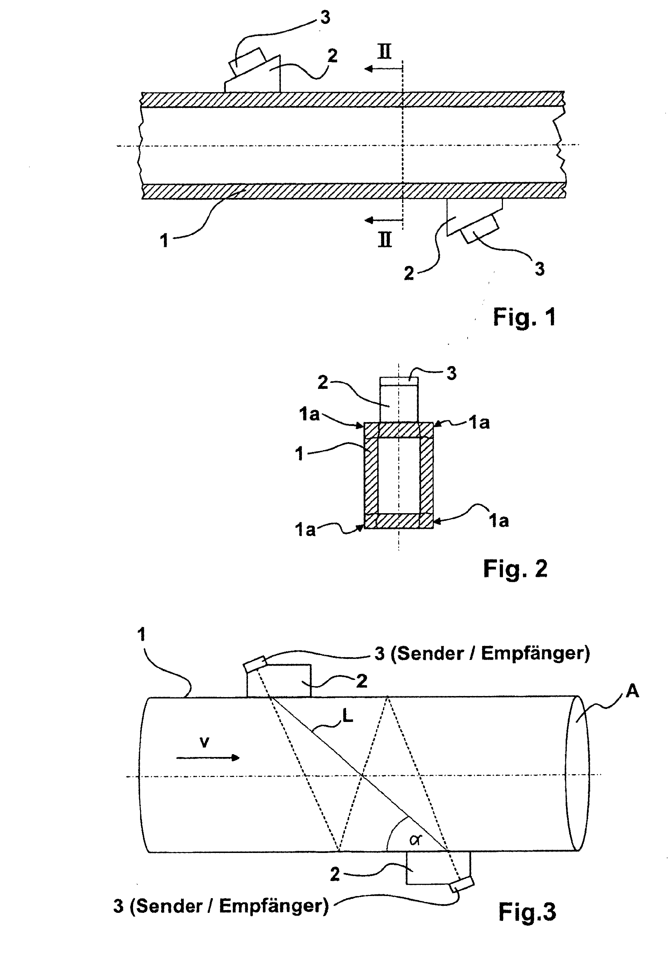

Gemäß der Figur 1 ist das Messrohr insgesamt mit 1 bezeichnet, wobei auf dem Messrohr auf zwei einander gegenüberliegenden Wänden des rechteckigen Messrohres zwei Ultraschallwandler 3 hintereinander versetzt angeordnet sind. Diese Ultraschallwandler 3 dienen als Sender/Empfänger und sitzen jeweils auf einem Koppelkeil 2 auf, der dafür sorgt, dass durch die Ultraschallwandler der Schall winklig in das Rohr 1 eingekoppelt wird. Bei der Ausführungsform gemäß Figur 1 sind - wie bereits ausgeführt - die Ultraschallwandler auf den einander gegenüberliegenden Flächen angeordnet. Es sei allerdings an dieser Stelle noch einmal darauf hingewiesen, dass die Anordnung der Ultraschallwandler auch auf der gleichen Fläche hintereinander erfolgen kann.

Aus Figur 2 ergibt sich die Darstellung des Rohres gemäß Figur 1 im Schnitt. Bei dieser Schnittdarstellung des rechteckigen Rohres 1 hat eine Gefügeänderung im Bereich der Kanten 1 a stattgefunden, die beispielsweise durch eine Kaltumformung des Rohres hervorgerufen sein kann. Die Breite sowohl des Koppelkeils als auch des Schallwandlers entspricht der letzten inneren Breite des Rechteckrohres.

Die Darstellung gemäß Figur 3 dient der Erläuterung für die Ermittlung der Durchflussgeschwindigkeit. Hierbei sind wiederum zwei Schallwandler 3 vorgesehen, die einander gegenüberliegend angeordnet sind, und in einem bestimmten Winkel das Schallsignal in das Rohr über die Rohrwandung des Rohres 1 einkoppeln. Die beiden Schallwandler fungieren hierbei wechselweise jeweils als Sender und Empfänger. Für die Bestimmung der Zeit $t_1$ von dem Schallwandler 3 (Sender) zu dem Schallwandler 3.2 (Empfänger) gilt folgende Beziehung:

$$t_1 = \frac{L}{c_0 + v\cos\alpha} \qquad [\ c_0 = \text{Schallgeschwindigkeit}\ ]$$

Für die Zeit $t_2$, d. h. die Zeit, die von dem Schallwandler 3 zu dem Schallwandler 3.1 zurückgelegt werden muss, also entgegen der Strömungsrichtung, gilt die Beziehung $t_2 = \frac{L}{c_0 - v\cos\alpha}$. Hieraus ergibt sich

$$\Delta t = t_2 - t_1 = 2L\frac{v\cos\alpha}{c_0^2 - v^2\cos^2\alpha}$$

Unter der Voraussetzung, dass $c^2$ wesentlich größer ist als $v^2\cos^2\alpha$ gilt die Beziehung für

$$v \approx \frac{c_0^2}{2L\cos\alpha}\Delta t\ .$$

Über die Querschnittsfläche kann dann mit Hilfe der Geschwindigkeit die Durchflussmenge/Zeiteinheit ermittelt werden.

**Patentansprüche**

1. Vorrichtung zur Ermittlung der Strömungsgeschwindigkeit eines Fluids oder Gases in einem Rohr (1), wobei das Rohr (1) zwei beabstandet zueinander angeordnete Ultraschallwandler (3) aufweist, die jeweils als Sender und Empfänger arbeiten,
**dadurch gekennzeichnet,**
**dass** das Rohr (1) mindestens zwei zueinander parallele Flächen aufweist, wobei mindestens zwei beabstandet zueinander angeordnete Schallwandler (3) auf der Außenseite auf mindestens einer der beiden parallelen Flächen aufgesetzt sind.

2. Vorrichtung nach Anspruch 1,
**dadurch gekennzeichnet,**
**dass** die Ultraschallwandler (3) beabstandet zueinander auf einer der zwei parallelen Flächen angeordnet sind.

3. Vorrichtung nach einem der vorangehenden Ansprüche,
**dadurch gekennzeichnet,**
**dass** das Rohr (1) als Vierkantrohr, insbesondere als Rechteckrohr, ausgebildet ist.

4. Vorrichtung nach Anspruch 3,
**dadurch gekennzeichnet,**
**dass** die Ultraschallwandler (3) auf der Schmalseite des Rechteckrohres (1) angeordnet sind.

5. Vorrichtung nach Anspruch 3,
**dadurch gekennzeichnet,**
**dass** die wirksame Breite des Schallwandlers (3) der lichten inneren Breite des Rohres (1) entspricht.

6. Vorrichtung nach einem der voranstehenden Ansprüche,
**dadurch gekennzeichnet,**

**dass** der Ultraschallwandler (3) die Schallwelle winklig in das Rohr einkoppelt.

7. Vorrichtung nach Anspruch 6,
**dadurch gekennzeichnet,**
**dass** zur winkligen Einkopplung des Schalls ein Koppelkeil (2) vorgesehen ist.

8. Vorrichtung nach einem der voranstehenden Ansprüche,
**dadurch gekennzeichnet,**
**dass** zur Erzeugung einer turbulenten Strömung in Abhängigkeit von der Viskosität und der Strömungsgeschwindigkeit des Mediums das Höhe : Breite Verhältnis zwischen 1 : 5 und 1 : 2, vorzugsweise bei 1 : 3 liegt.

9. Vorrichtung nach einem der voranstehenden Ansprüche,
**dadurch gekennzeichnet,**
**dass** der Winkel des Koppelkeils (2) derart gewählt ist, dass bei Auftreffen den Longitudinalwellenanteils auf die Oberfläche des Rohres (1) dieser Wellenanteil nahezu vollständig reflektiert wird.

10. Vorrichtung nach einem der voranstehenden Ansprüche,
**dadurch gekennzeichnet,**
**dass** die Wandstärke kleiner ist als die Wellenlänge der in die Wandung eingekoppelten Transversalwelle.

11. Vorrichtung nach einem der voranstehenden Ansprüche,
**dadurch gekennzeichnet,**
**dass** das Vierkantrohr in den Ecken ein unterschiedliches Gefüge zu den Flächen des Rohres (1) aufweist.

**Fig. 1**

**Fig. 2**

**Fig.3**

3 (Sender / Empfänger)

A

L

v

α

2

3 (Sender / Empfänger)